# EUROPEAN PATENT APPLICATION

(11) **EP 2 083 317 A1**
(43) Date of publication of application: **29.07.2009**
(21) Application number: 09151321.8
(22) Date of filing: 26.01.2009
(51) Int. Cl.: G02F 1/1339, G02F 1/1335, G02F 1/1343, G02F 1/139

(54) **Liquid crystal display and manufacturing method thereof**

(30) Priority: 28.01.2008 KR 20080008689
(71) Applicant: Samsung Mobile Display Co., Ltd., Suwon-si Gyeonggi-do (KR)
(72) Inventor: KIM, Jeongsu, Gyeonggi-do (KR)
(74) Representative: Gulde Hengelhaupt Ziebig & Schneider

(57) **Abstract**

A liquid crystal display includes a first substrate. A color filter covers the first substrate and includes black matrices and color photoresists. Photo spacers upwardly protrude from the black matrices. The photo spacers are formed using a photolithography process so that the spacers are not formed in color photoresist regions. First transparent electrodes cover the color filter on regions other than regions where the photo spacers are formed aned extend in a first direction. A second substrate faces the first substrate. Second transparent electrodes cover the second substrate, are between the second substrate and the first transparent electrodes and extend in a second direction crossing the first direction.

## Description

### BACKGROUND OF THE INVENTION

### 1. Field of the Invention

The present invention relates to a liquid crystal display and a manufacturing method thereof, and more particularly to, a liquid crystal display having a structure that prevents degradation of a display quality due to leakage of light.

### 2. Description of the Related Art

A liquid crystal display (LCD), which is a kind of flat panel display, applies a varying electric voltage to a layer of liquid crystal that has optical properties between those of a conventional liquid and those of a solid crystal, thereby inducing changes in its optical properties. The LCD has wide applications since it has lower power consumption than a conventional cathode ray tube (CRT), is of small volume, may be large-sized and have a fine pitch.

LCDs are divided into active-matrix LCDs, which use switching devices and twisted nematic (TN) liquid, and passive-matrix LCDs, which use super-twisted nematic (STN) liquid.

The active-matrix LCD uses a thin film transistor (TFT) as a switch. Whereas, the passive-matrix LCD does not need the TFT, and, as such, requires no complex circuitry.

The passive-matrix LCD typically uses ball spacers after forming transparent electrodes. The ball spacers are fabricated by scattering spacers mixed with a solvent to a glass substrate on which the transparent electrodes are formed. Spacers are scattered on an upper portion of color photoresist regions, which degrades the display quality of panels due to leakage of light.

Further, the transparent electrodes are formed using a different processing line from those used to manufacture panels. Therefore, conventional LCDs must change processing lines before and after forming the transparent electrodes in order to manufacture the panels, which degrades the display quality of the panels due to unstable substrates caused by a change in processing lines.

### SUMMARY OF THE INVENTION

In accordance with the present invention a liquid crystal display, and a manufacturing method thereof, is provided that forms spacers in a black matrix region using a photolithography process, so that the spacers are not formed in color photoresist regions, thereby preventing degradation of a display quality due to leakage of light.

Also in accordance with the present invention a liquid crystal display, and a manufacturing method thereof, is provided that forms transparent electrodes as a final process of manufacturing a panel, thereby reducing costs incurred in changing a processing line and allowing for a stable manufacturing of the panel.

According to an exemplary embodiment of the present invention, a liquid crystal display includes a first substrate. A color filter is formed to cover the first substrate and includes black matrices and color photoresists. A second substrate faces the first substrate. Photo spacers are arranged entirely on the black matrices and are formed to protrude from the black matrices of the color filter toward the second substrate to form a gap between the first and second substrates. In other words, the photo spacers are formed on the black matrices such that they have no overlap with the color photoresists. First transparent electrodes are arranged in a first direction to cover the color filter on regions other than regions where the photo spacers are formed. Second transparent electrodes are arranged in a second direction that crosses the first direction to cover the second substrate and are between the second substrate and the first transparent electrodes.

The photo spacers may be formed on the black matrices of the cooler filter adjacent to areas where the first and second transparent electrodes cross each other.

The first transparent electrodes may be separated from the side surfaces of the photo spacers.

The liquid crystal display may further include an overcoat layer formed to cover the color filter between the color filter and the photo spacers.

The liquid crystal display may further include an insulation film formed to cover the overcoat layer between the overcoat layer and the photo spacers.

The liquid crystal display may further include liquid crystal injected between the first transparent electrodes formed on the first substrate and the second transparent electrodes formed on the second substrate.

The liquid crystal may be color super twisted nematic (CSTN) liquid crystal.

The color photoresists may include red photoresists, green photoresists, and blue photoresists, and may be arranged in respective rows or columns on the color filter.

The pixels may correspond to areas where the first and second transparent electrodes cross each other and include a red photoresist, a green photoresist, and a blue photoresist.

The first and second transparent electrodes may be perpendicular to each other and are spaced apart from each other.

According to another exemplary embodiment of the present invention, there is provided a method of manufacturing a liquid crystal display. A first substrate is prepared. A color filter is formed to form black matrices and color photoresists to cover the first substrate. Photo spacers are arranged entirely on the black matrices (112a) and formed to upwardly protrude from the black matrices to form a gap between the first substrate and the second substrate. First transparent electrodes are formed to cover the color filter. The first transparent electrodes are patterned to remove the first transparent electrodes formed on an upper surface and side surfaces of the photo spacers and to arrange the first transparent electrodes in a first direction. A second substrate is combined to the first substrate.

The patterning step of the first transparent electrodes may include removing the first transparent electrodes from the photo spacers such that side surfaces of the first transparent electrodes are spaced apart from side surfaces of the photo spacers.

The color photoresists may include rows or columns of red photoresists, green photoresists, and blue photoresists on the color filter. In patterning the first transparent electrodes, the first transparent electrodes may be arranged in the first direction according to pixels that include a red photoresist, a green photoresist, and a blue photoresist.

The method may further include after forming the color filter, forming an overcoat layer to cover the color filter.

The method may further include after forming the overcoat layer, forming an insulation layer to cover the overcoat layer.

The method may further include after combining the second substrate to the first substrate, injecting liquid crystal between the first substrate and the second substrate.

### BRIEF DESCRIPTION OF THE DRAWINGS

FIG. 1 is a block diagram of a liquid crystal display according to an exemplary embodiment of the present invention.

FIGS. 2a and 2b are a perspective view of a panel of the liquid crystal display of FIG. 1 and a cross-sectional view of the liquid crystal display of FIG. 1 taken along a line 2b-2b, respectively.

FIG. 3 is an enlarged plan view of a panel of the liquid crystal display of FIG. 1.

FIG. 4 is a flowchart illustrating a method of manufacturing the liquid crystal display of FIG. 2b according to an exemplary embodiment of the present invention.

FIGS. 5a, 5b, 5c, 5d, 5e, 5f, 5g, 5h and 5i are cross-sectional views of the liquid crystal display of FIG. 2b as manufactured in accordance with the sequence depicted in FIG. 4.

### DETAILED DESCRIPTION

Like reference numerals in the drawings denote like elements throughout the specification. It will be understood that when an element is referred to as being "electrically coupled" to another element, the element can be directly electrically coupled to another element or through intervening elements.

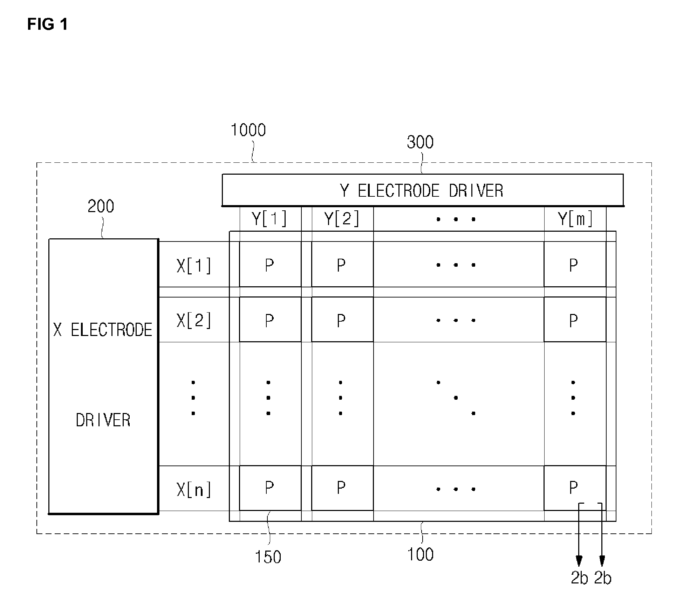

Referring to FIG. 1, the liquid crystal display 1000 includes a liquid crystal panel 100 (hereinafter also referred to as a "panel), an X electrode driver 200, and a Y electrode driver 300.

The panel 100 includes a plurality of first transparent electrodes X[1], X[2],... X[n] arranged in rows, a plurality of second transparent electrodes Y[1], Y[2],... Y[m] arranged in columns, and a pixels defined by the plurality of first transparent electrodes X[1], X[2],... X[n] and the plurality of second transparent electrodes Y[1], Y[2],... Y[m]. A pixel 150 (also identified by "P" in the drawings) may be formed in an area where one of the first transparent electrodes X[1], X[2],... X[n] and one of the second transparent electrodes Y[1], Y[2],... Y[m] cross each other.

The X electrode driver 200 applies an electric field to a pixel 150 of the panel 100 through the first transparent electrodes X[1], X[2],... X[n] that are electrically coupled to the panel 100.

The Y electrode driver 300 applies an electric field to a pixel 150 of the panel 100 through the second transparent electrodes Y[1], Y[2],... Y[m] that are electrically coupled to the panel 100.

As described above, the X electrode driver 200 may supply a voltage to the first transparent electrodes X[1], X[2],... X[n], and the Y electrode driver 300 may supply a voltage to the second transparent electrodes Y[1], Y[2],... Y[m].

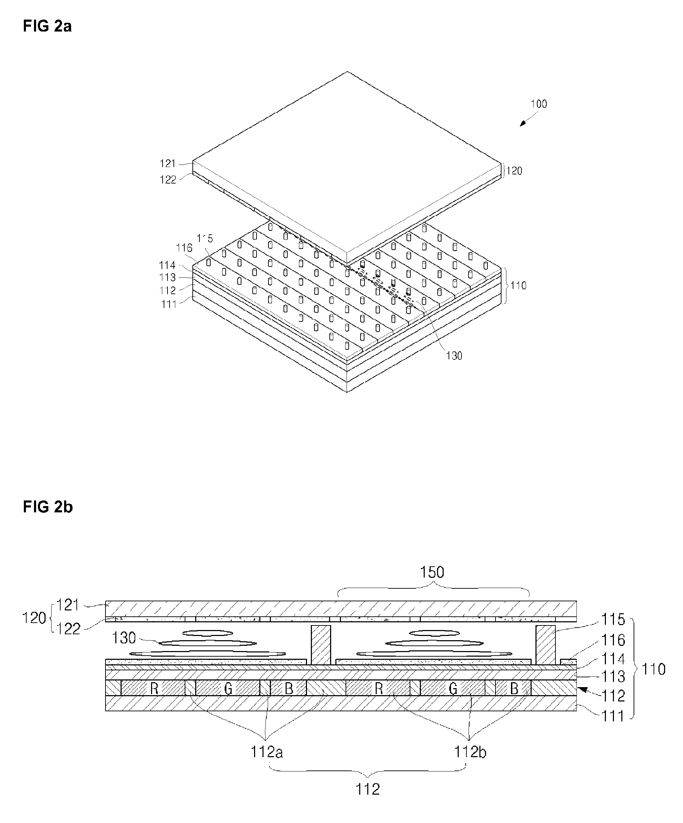

FIGS. 2a and 2b are a perspective view of the panel 100 of the liquid crystal display 1000 of FIG. 1 and a cross-sectional view of the liquid crystal display 1000 of FIG. 1 taken along a line 2b-2b, respectively, according to an exemplary embodiment of the present invention.

Referring to FIGS. 2a and 2b, the panel 100 includes a first substrate unit 110, a second substrate unit 120, and liquid crystal 130.

The first substrate unit 110 includes a first substrate 111, a color filter 112, an overcoat layer 113, an insulation film 114, photo spacers 115, and first transparent electrodes 116.

The first substrate 111 is usually a glass substrate and may be formed of soda lime glass, of neutral borosilicate glass, of non-alkali glass, or an equivalent thereof according to the chemical composition of the glass. However, the present invention is not limited thereto.

The color filter 112 is formed to cover the upper surface of the first substrate 111. Preferably, the color filter 112 is formed directly on the upper surface of the first substrate 111. The color filter 112 includes color photoresists 112b and black matrices 112a disposed between the color photoresists 112b. The color photoresists 112b include a red R photoresist, a green G photoresist, and a blue B photoresist, and are arranged in a plurality of lines of rows in the color filter 112. Each color photoresist 112b is spaced apart from its adjacent color photoresist 112b by a black matrix 112a. A pixel 150 of the panel 100 includes a R photoresist, a G photoresist, and a B photoresist. That is, one pixel 150 includes three photoresists. The black matrices 112a may be formed of resin, of chrome, of carbon black, of titanium oxide, or an equivalent thereof.

The overcoat layer 113 is formed to cover the upper surface of the color filter 112. Preferably, the overcoat layer 113 is formed directly on the upper surface of the color filter 112. The overcoat layer 113 is provided to make steps between the black matrices 112a and the color photoresisters 112b flat when the color filter 112 is formed. The overcoat layer 113 may be formed of acrylic resin, of polyimide resin, or an equivalent thereof. However, the present invention is not limited thereto.

The insulation film 114 is formed to cover the upper surface of the overcoat layer 113 in order to enhance a contact adhesion between the first transparent electrodes 116 and the overcoat layer 113 above which the first transparent electrodes 116 are formed. Preferably, the insulation film 114 is formed directly on the upper surface of the overcoat layer 113. The insulation film 114 may be formed of oxide SiO₂ or an equivalent thereof. However, the present invention is not limited thereto.

The photo spacers 115 are on, preferably directly on, the insulation film 114 and are formed in regions entirely corresponding to regions where the black matrices 112a of the color filter 112 are formed. In other words, the photo spacers 115 are formed such that they are not formed on or above regions where the color photoresits 112b of the color filter 112 are formed. In yet other words, the photo spacers 115 have no overlap with the color photoresists 112b. The photo spacers 115 are formed to control a cell gap between the first substrate unit 110 and the second substrate unit 120 in order to maintain a constant thickness of the liquid crystal 130. The photo spacers 115 have a stronger contact adhesion with the first substrate unit 110 than that with the second substrate unit 120. The photo spacers 115 are formed adjacent the pixels 150. However, the present invention is not limited to a number of photo spacers 115 corresponding to the number of pixels 150. The photo spacers 115 are formed on or above the black matrices 112a that are generated by the B photoresists that are relatively small, i.e. have a relatively small width in Fig. 2b. However, the present invention is not limited to regions where the photo spacers 115 are formed as shown in Fig. 2b. That is, the photo spacers 115 may be formed in any regions of or above the black matrices 112a as long as the cross-section of the photo spacers 115 does not overlap with the cross sections of the color photoresists 112b. The photo spacers 115 may be formed in a selective region using a photolithography process. The photo spacers 115 are formed using the photolithography process, thereby preventing degradation of a display quality of the panel 100 due to leakage of light caused by undesired spacers that are formed on the color photoresists 112b.

The first transparent electrodes 116 are formed to cover the upper surface of the insulation film 114 and are separated from the side surface of the photo spacers 115. The first transparent electrodes 116 are arranged in a first direction to cover the color photoresists 112b of the color filter 112. In the present embodiment, although the first transparent electrodes 116 are arranged in a column direction, they may be formed in a row direction. If the first transparent electrodes 116 are formed in the row direction, the second transparent electrodes 122 are formed in the column direction. If the first transparent electrodes 116 are formed in the column direction, the second transparent electrodes 122 are formed in the row direction. That is, the first transparent electrodes 116 and the second transparent electrodes 122 are perpendicular to each other. The first transparent electrodes 116 may be formed of indium tin oxide (ITO), of tin oxide (SnO₂), or an equivalent thereof. However, the present invention is not limited thereto.

The second substrate unit 120 includes a second substrate 121 and the second transparent electrodes 122.

The second substrate 121 may be formed of soda lime glass, of neutral borosilicate glass, of non-alkali glass, or an equivalent thereof according to the chemical composition of the glass. However, the present invention is not limited thereto.

The second transparent electrodes 122 are arranged between the second substrate 121 and the first transparent electrodes 116. The second transparent electrodes 122 are arranged in a second direction to cover the second substrate 121. In the present embodiment, although the second transparent electrodes 122 are arranged in a row direction, they may be formed in a column direction. If the second transparent electrodes 122 are formed in the column direction, the first transparent electrodes 116 are formed in the row direction. If the second transparent electrodes 122 are formed in the row direction, the first transparent electrodes 166 may be formed in the column direction. That is, the first transparent electrodes 116 and the second transparent electrodes 122 are perpendicular to each other. The first transparent electrodes 116 and the second transparent electrodes 122 are spaced apart from each other in order to apply an electric field to liquid crystal material therebetween. The second transparent electrodes 122 may be formed of indium tin oxide (ITO), of tin oxide (SnO₂), or an equivalent thereof. However, the present invention is not limited thereto.

The liquid crystal 130 material is provided between the first substrate unit 110 and the second substrate unit 120. An electric field applied between the first transparent electrodes 116 and the second transparent electrodes 122, changes an arrangement of liquid crystal molecules. The liquid crystal material 130 is preferably color super twisted nematic (CSTN) liquid crystal. The CSTN liquid crystal is suitable for passive-matrix LCD since it uses a transparency that very sharply varies according to an applied voltage having a torsion angle between 240 degrees and 270 degrees.

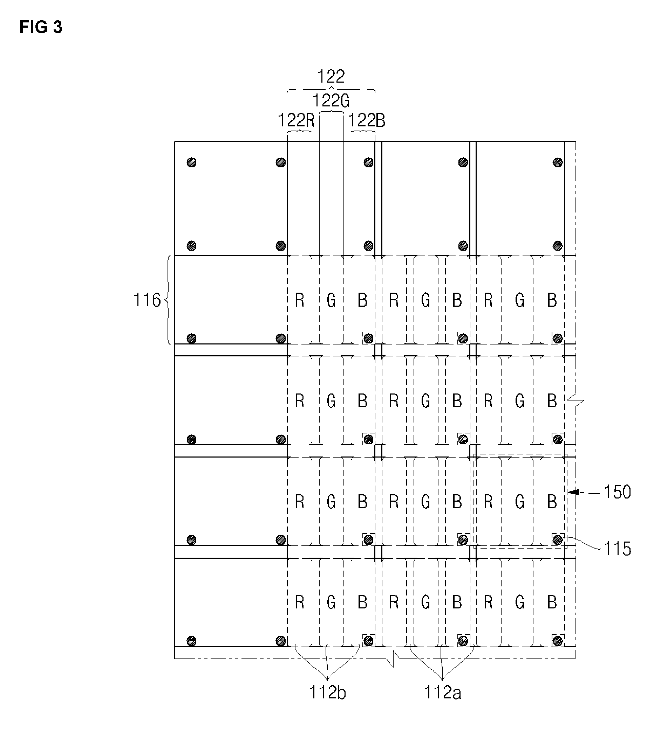

FIG. 3 is an enlarged plan view of a panel of the liquid crystal display of FIG. 1 according to an exemplary embodiment of the present invention. Referring to FIG. 3, the panel 100 includes the color photoresists 112b, the photo spacers 115, the first transparent electrodes 116, and the second transparent electrodes 122.

The color photoresists 112b include an R photoresist, a G photoresist, and a B photoresist, and are arranged in a plurality of lines of rows in the color filter 112. The black matrices 112a are disposed between the color photoresists 112b. A pixel 150 of the panel 100 includes the R photoresist, the G photoresist, and the B photoresist. That is, one pixel 150 includes three photoresists.

The photo spacers 115 are formed in some of regions where the black matrices 112a are formed. The B photoresists are formed smaller than the R photoresists and the G photoresists. The photo spacers 115 are formed in the black matrices 112a that are generated by the B photoresists that are relatively small. However, the present invention is not limited to regions where the photo spacers 115 are formed. That is, the photo spacers 115 can be formed in any regions of the black matrices 112a. The photo spacers 115 are formed adjacent the pixels 150, respectively. However, the present invention is not limited to a number of photo spacers 115 corresponding to the number of pixels 150.

The first transparent electrodes 116 are arranged in a first direction to cover the color photoresists 112b of the color filter 112. In the present exemplary embodiment, although the first transparent electrodes 116 are arranged in a column direction, they may be formed in a row direction. If the first transparent electrodes 116 are formed in the row direction, the second transparent electrodes 122 are formed in the column direction. If the first transparent electrodes 116 are formed in the column direction, the second transparent electrodes 122 may be formed in the row direction. That is, the first transparent electrodes 116 and the second transparent electrodes 122 are perpendicular to each other. Areas where the first transparent electrodes 116 and the second transparent electrodes 122 cross each other are the pixels 150.

The second transparent electrodes 122 are arranged in a second direction perpendicular to the first direction that the first transparent electrodes 116 are arranged. The second transparent electrodes 122 include second R transparent electrodes 122R that are arranged in the second direction to cover the upper surface of the R photoresists, second G transparent electrodes 122G that are arranged in the second direction to cover the upper surface of the G photoresists, and second B transparent electrodes 122B that are arranged in the second direction to cover the upper surface of the B photoresists. In the present exemplary embodiment, although the second direction is a row direction, the second transparent electrodes 122 may be formed in a column direction. If the second direction is the column direction, the first transparent electrodes 116 that are arranged in the first direction are formed in the column direction. Points where the first transparent electrodes 116 and the second transparent electrodes 122 cross each other are the pixels 150. If an electric field is applied between the first transparent electrodes 116 and the second transparent electrodes 122R, 122G, and 122B, an arrangement of liquid crystal molecules varies. The pixels 150 of the panel 100 display an image according to the arrangement of liquid crystal molecules.

A method of manufacturing a liquid crystal display as described above will now be described.

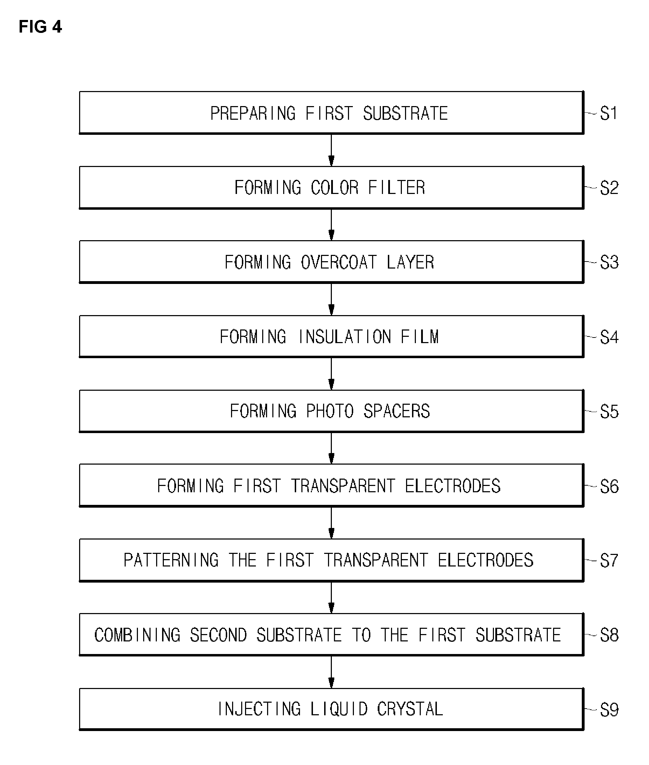

FIG. 4 is a flowchart illustrating a method of manufacturing the liquid crystal display of FIG. 2B according to an exemplary embodiment of the present invention. Referring to FIG. 4, the method includes the sequence of operations of: preparing a first substrate (S1), forming a color filter (S2), forming an overcoat layer (S3), forming an insulation film (S4), forming photo spacers (S5), forming first transparent electrodes (S6), patterning the first transparent electrodes (S7), combining a second substrate to the first substrate (S8), and injecting liquid crystal (S9).

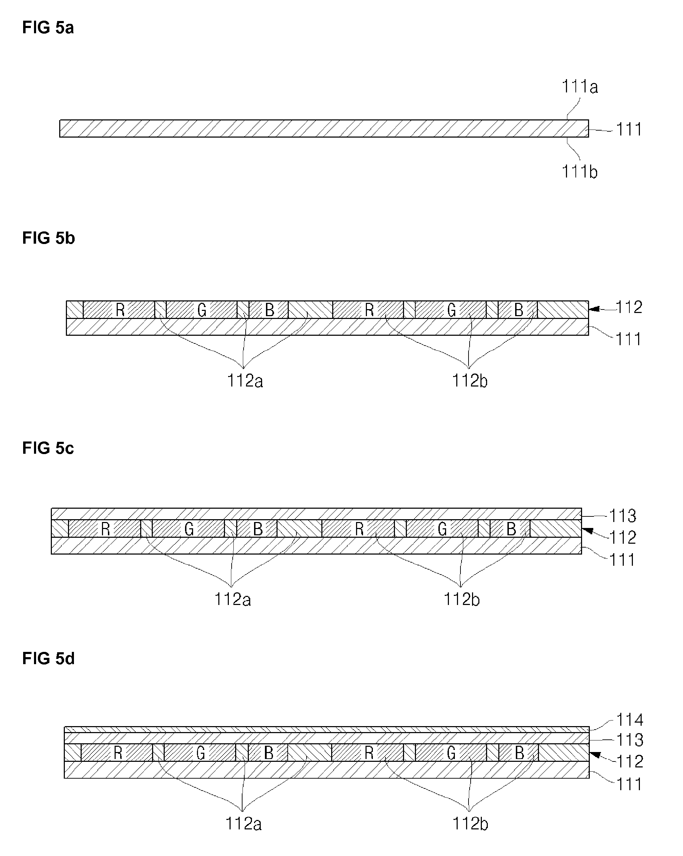

FIGS. 5a through 5i are cross-sectional views are cross-sectional views of the liquid crystal display of FIG. 2b as manufactured in accordance with the sequence depicted in FIG. 4.

Referring to FIG. 5a, in the operation of preparing a first substrate (S1), the first substrate 111, having a first surface 111 a that is approximately or wholly flat and a second surface 111 b that is an opposite to the first surface 111 a and is approximately or wholly flat, is prepared. The first substrate 111 may be formed of soda lime glass, of neutral borosilicate glass, of non-alkali glass, or an equivalent thereof according to the chemical composition of the glass. However, the present invention is not limited thereto.

Referring to FIG. 5b, in the operation of forming a color filter (S2), the black matrices 112a are formed by depositing a light blocking material on, preferably directly on, the first surface 111 a of the first substrate 111, patterning the first substrate 111 using an exposure and developing process, and hardening the first substrate 111. The light blocking material may be formed of resin, of chrome, of carbon black, of titanium oxide, or an equivalent thereof. However, the present invention is not limited thereto. The color photoresists 112b are formed by sequentially coating light reducing films including pigments expressing colors on the pixels 150 where the black matrices 112a are not formed, performing the exposure and developing process, and hardening the pixels 150, and then the color filter 112 is formed. The color photoresists 112b include the R photoresist, the G photoresist, and the B photoresist.

Referring to FIG. 5c, in the operation of forming an overcoat layer (S3), the overcoat layer 113 is deposited on, preferably directly on, the color filter 112 to cover the color filter 112. The overcoat layer 113 flattens steps between the black matrices 112a and the color photoresists 112b when the color filter 112 is formed. The overcoat layer 113 may be formed of acrylic resin, or polyimide resin, or an equivalent thereof. However, the present invention is not limited thereto.

Referring to FIG. 5d, in the operation of forming an insulation film (S4), the insulation film 114 is deposited on, preferably directly on, the overcoat layer 113 to cover the overcoat layer 113. The insulation film 114 may be formed using any one of selected from a thermal oxidation method, a chemical vapor deposition (CVD) method, an electrochemical oxidation method, or an equivalent thereof. However, the present invention is not limited thereto. The insulation film 114 may be formed of oxide SiO₂ or an equivalent thereof. However, the present invention is not limited thereto.

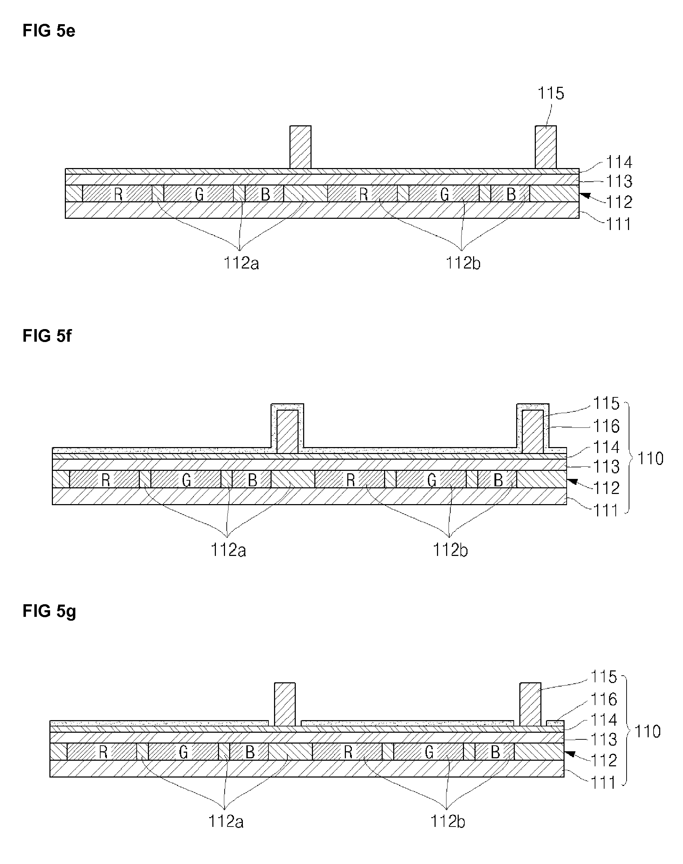

Referring to FIG. 5e, in the operation of forming photo spacers (S5), the photo spacers 115 are formed at desired locations by photo spacer coating on, preferably directly on, the insulation film 114 to cover the insulation film 114 and performing exposure, developing, and etching processes. The photo spacers 115 are formed using photolithography, thereby preventing degradation of a display quality of the panel 100 due to leakage of light caused by undesired spacers formed on the color photoresists 112b. The photo spacers 115 are formed on or above regions of the black matrices 112a, i.e. entirely on the black matrices 112a such that the photo spacer 115 have no overlap with the color photoresists 112b.

Referring to FIG. 5f, in the operation of forming first transparent electrodes (S6), the first transparent electrodes 116 that are electrotype materials are formed on, preferably directly on, the insulation film 114 and the photo spacer 115 to cover the insulation film 114 and the photo spacers 115. The electrotype materials may be formed of indium tin oxide (ITO), of tin oxide (SnO₂), or an equivalent thereof. However, the present invention is not limited thereto. The first transparent electrodes 116 may be formed using a screen printing method, an offset printing method, a photolithography method, or an equivalent method. However, the present invention is not limited thereto.

Referring to FIG. 5g, in the operation of patterning the first transparent electrodes 116 (S7), the first transparent electrodes 116 are formed in a first direction by patterning the electrotype materials. When patterning the electrotype materials, the first transparent electrodes 116 formed on the upper surface and the side surface of the photo spacers 115 are removed. That is, the first transparent electrodes 116 are removed from the photo spacers 115 side surface such that the side surfaces of the first transparent electrodes 116 are spaced apart from the side surfaces of the photo spacers 115. The first transparent electrodes 116 are patterned using a photolithography process including photoresist coating, etching of the first transparent electrodes 116 by exposure and developing, and patterning. However, the present invention is not limited thereto.

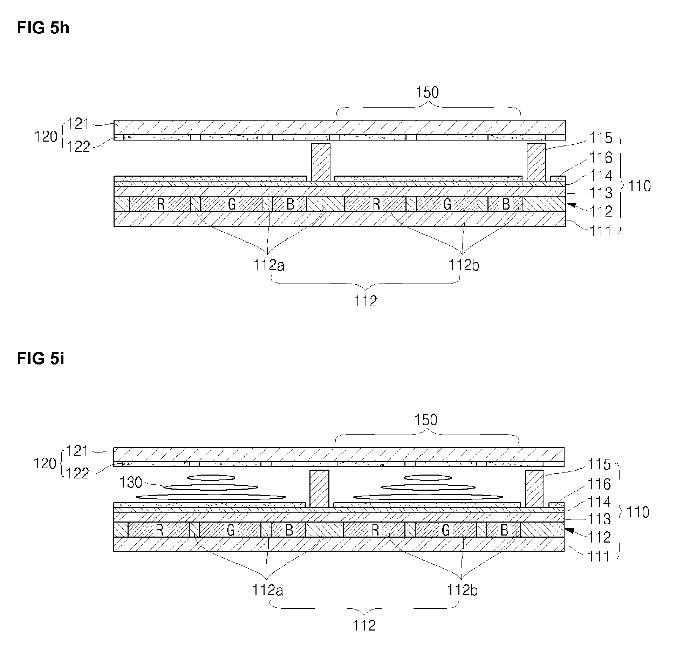

Referring to FIG. 5h, in the operation of combining a second substrate to a first substrate (S8), the second substrate unit 120 is closely combined to the first substrate unit 110 so that the first transparent electrodes 116 and the color filter 112 cross the second transparent electrodes 122 of the second substrate unit 120. A seal (not shown) is printed to make a frame receiving liquid crystal by adhering and fixing the first and second substrate units 110, 120. The first and second substrate units 110, 120 are combined using a vacuum method, a high temperature method, and a pressure method. However, the present invention is not limited thereto. The second substrate of the second substrate unit 120 may be formed of soda lime glass, of neutral borosilicate glass, of non-alkali glass, or an equivalent thereof according to the chemical composition of the glass. However, the present invention is not limited thereto. The second transparent electrodes 122 of the second substrate unit 120 can be formed and patterned using the same process as used to form and pattern the first transparent electrodes 116.

Referring to FIG. 5i, in the operation of injecting liquid crystal (S9), the liquid crystal 130 is injected between the first substrate unit 110 and the second substrate unit 120. The liquid crystal 130 is filled within an empty space between the first substrate unit 110 and the second substrate unit 120. The liquid crystal 130 can be injected into an injection hole between the first substrate unit 110 and the second substrate 120 using a liquid crystal dispenser and then the injection hole is sealed. However, the present invention is not limited thereto.

The method of manufacturing the liquid crystal display forms the first transparent electrodes 116 as a final process as compared to a conventional method of forming spacers after forming the first transparent electrodes 116, thereby reducing costs incurred in changing a process line for manufacturing a panel of the liquid crystal display and more stably manufacturing the panel than the conventional method. According to the present invention, the photo spacers 115 are formed before the first transparent electrodes 115 are formed, i.e. the first transparent electrodes 115 are formed after the photo spacers 115, thereby forming the photo spacers 115 using a photolithography process in the same process line as the process line of forming the first substrate unit 110 before the photo spacers 115 are formed.

The liquid crystal display and the manufacturing method thereof according to the present invention form a spacer in black matrix regions using a photolithography process, so that the spacer are not formed in color photoresist regions, thereby preventing degradation of a display quality due to leakage of light.

The liquid crystal display and the manufacturing method thereof according to the present invention form transparent electrodes at a final process of manufacturing a panel, thereby reducing costs incurred in a change of a processing line and stably manufacturing the panel.

While the present invention has been particularly shown and described with reference to exemplary embodiments thereof, it will be understood by those skilled in the art that various changes in form and details may be made therein without departing from the scope of the invention as defined by the appended claims. The exemplary embodiments should be considered in a descriptive sense only and not for purposes of limitation. Therefore, the scope of the present invention is defined not by the detailed description of the invention but by the appended claims, and all differences within the scope of the present invention will be construed as being included in the present invention.

## Claims

1. A liquid crystal display, comprising:
a first substrate (111);
a color filter (112) covering the first substrate (111) and including black matrices (112a) and color photoresists (112b);
a second substrate (121) facing the first substrate (111);
photo spacers (115) arranged entirely on the black matrices (112a) and protruding from the black matrices (112a) toward the second substrate (121) to form a gap between the first substrate (111) and the second substrate (121);
first transparent electrodes (116), covering the color filter (112) on regions other than regions where the photo spacers (115) are formed, and extending in a first direction; and
second transparent electrodes (122) covering the second substrate (121) between the second substrate (121) and the first transparent electrodes (116) and extending in a second direction crossing the first direction.

2. The liquid crystal display of claim 1, wherein the photo spacers (115) are arranged on the black matrices (112a) adjacent to areas where the first transparent electrodes (116) and the second transparent electrodes (122) cross each other.

3. The liquid crystal display of claim 1 or 2, wherein the first transparent electrodes (116) are arranged to be spaced apart from side surfaces of the photo spacers (115).

4. The liquid crystal display of one of the previous claims, further comprising an overcoat layer (113) covering the color filter (112) between the color filter (112) and the photo spacers (115).

5. The liquid crystal display of claim 4, further comprising an insulation film (114) covering the overcoat layer (113) between the overcoat layer (113) and the photo spacers (115).

6. The liquid crystal display of one of the previous claims, further comprising liquid crystal material (130) provided between the first transparent electrodes (116) and the second transparent electrodes (122).

7. The liquid crystal display of claim 6, wherein the liquid crystal material (130) is color super twisted nematic liquid crystal.

8. The liquid crystal display of one of the previous claims, wherein the color photoresists (112b) include red photoresists, green photoresists, and blue photoresists, and are in respective rows and columns on the color filter (112).

9. The liquid crystal display of claim 8, wherein pixels (150) correspond to areas where the first transparent electrodes (116) and the second transparent electrodes (122) cross each other and include ones of the red photoresists, the green photoresists, and the blue photoresists.

10. The liquid crystal display of one of the previous claims, wherein the first transparent electrodes (116) and the second transparent electrodes (122) are perpendicular to and spaced apart from each other.

11. A method of manufacturing a liquid crystal display, comprising:
preparing a first substrate (111);
forming a color filter (112) having black matrices (112a) and color photoresists (112b) covering the first substrate (111);
forming photo spacers (115) entirely on the black matrices (112a) and upwardly protruding from the black matrices (112a) to form a gap between the first substrate (111) and the second substrate (121);
forming first transparent electrodes (116) covering the color filter (112) and the photo spacers (115);
patterning the first transparent electrodes (116) to remove the first transparent electrodes (116) formed on an upper surface and side surfaces of the photo spacers (115) and to arrange the first transparent electrodes (116) in a first direction; and
combining a second substrate (121) to the first substrate (111).

12. The method of claim 11, further comprising, after forming the color filter (112), forming an overcoat layer (113) covering the color filter (112).

13. The method of claim 12, further comprising, after forming the overcoat layer (113), forming an insulation layer (114) covering the overcoat layer (113).

14. The method of one of the previous claims 11 to 13, further comprising, after combining the second substrate (121) to the first substrate (111), injecting liquid crystal material between the first substrate and the second substrate (121).
